# EUROPEAN PATENT APPLICATION

(11) **EP 4 283 720 A1**
(43) Date of publication of application: **29.11.2023**
(21) Application number: 22913710.4
(22) Date of filing: 21.10.2022
(51) Int. Cl.: H01M 4/587, H01M 4/583, H01M 10/0525

(54) **GRAPHITE NEGATIVE ELECTRODE MATERIAL AND PREPARATION METHOD THEREFOR, AND LITHIUM ION BATTERY**

(30) Priority: 28.12.2021 CN 202111620334
(71) Applicant: BTR NEW MATERIAL GROUP CO., LTD., Shenzhen, Guangdong 518106 (CN)
(72) Inventor: WU, Xuan, Shenzhen, Guangdong 518106 (CN); FAN, Xiaohua, Shenzhen, Guangdong 518106 (CN); ZHOU, Haihui, Shenzhen, Guangdong 518106 (CN); REN, Jianguo, Shenzhen, Guangdong 518106 (CN); HE, Xueqin, Shenzhen, Guangdong 518106 (CN)
(74) Representative: Fioravanti, Corrado
(86) International application number: PCT/CN2022/126770
(87) International publication number: WO 2023/124447

(57) **Abstract**

The present disclosure relates to a graphite negative electrode material and a preparation method thereof and a lithium ion battery, wherein the graphite negative electrode material comprises spherical graphite and a carbon coating layer, the carbon coating layer comprises an M element-containing modifying group, where M is at least one selected from the group consisting of B, N, and P. The preparation method of a graphite negative electrode material comprises performing a thermal polymerization treatment on a mixture containing spherical graphite, a coating agent, and a modifying additive, to obtain a precursor, wherein modifying additive comprises an element M-containing compound, and M is at least one selected from the group consisting of B, N, and P; and performing a carbonization treatment on the precursor under a protective atmosphere, to obtain the graphite negative electrode material. The graphite negative electrode material prepared by the present disclosure can improve expansion of natural graphite and improve the cycle performance.

## Description

### Cross-reference to Related Application

The present disclosure claims the priority to the Chinese patent application with the filing No. "CN202111620334.5" filed with the Chinese Patent Office on December 28, 2021, and entitled "Graphite Negative Electrode Material and Preparation Method thereof and Lithium Ion Battery", all the contents of which are incorporated herein by reference.

### Technical Field

The present disclosure relates to the field of lithium ion batteries, and relates to a graphite negative electrode material and a preparation method thereof and a lithium ion battery.

### Background Art

Natural graphite is one of the main graphite negative electrode materials of lithium ion batteries, has the advantages such as high capacity, high compaction, environmental friendliness, and low price, and is widely applied in fields such as 3C and electric tools. In recent years, the application fields of the lithium ion battery has been gradually expanding towards power, and higher requirements are put forward on the cycle performance and environmental bearing capacity of the lithium battery. However, because the conventional natural graphite is obtained by mechanically crushing flake graphite, rich void structures are retained in particles, and these void structures make a contact area of the material with an electrolytic solution much larger than that of artificial graphite with the same particle size, such that side reactions are greatly increased, and attenuation of the battery is greatly accelerated, then requirements in the power field can hardly be met. Therefore, how to reduce the internal void structures of the natural graphite, and increase the cycle lifetime becomes one of the important directions for improving the natural graphite.

In the current industry, the spherical natural graphite is modified mainly by means of coating at least partial surface, to construct a core-shell structure with an inner core being natural graphite and an outer shell being soft carbon, so that direct contact between the electrolytic solution and the natural graphite is reduced, and side reactions between the natural graphite and the electrolytic solution are reduced, thereby improving first efficiency and expansion property of the natural graphite negative electrode. However, these existing solutions do not solve the problem that the first efficiency of the whole material is still relatively low due to the side reactions of the introduced shell and the electrolytic solution, and meanwhile, the conventional core-shell structure cannot prevent, during the cycle, the electrolytic solution from infiltrating and permeating into the interior of the material particles, then the electrolytic solution continuously reacts with the inner core natural graphite, accompanied by violent volume expansion caused by co-intercalation of anions and solvents molecules, thus leading to problems of cycle deterioration and attenuation of life span.

Therefore, to develop a graphite negative electrode material with excellent cycle performance and low volume expansion effect and a preparation method thereof is still a technical problem in the art.

### Summary

The present disclosure provides a graphite negative electrode material, wherein the graphite negative electrode material includes graphite and a carbon coating layer present on at least a part of a surface of the graphite, the carbon coating layer includes an M element-containing modifying group, where M is at least one selected from the group consisting of B, N, and P, and an impact factor τ of the modifying group has a value range of 0.5≤τ≤10.

Optionally, the graphite includes spherical graphite.

Optionally, the spherical graphite is natural graphite.

Optionally, the graphite has a median particle size of 5 µm~25 µm.

Optionally, a mass ratio of the graphite to the carbon coating layer is (1~99):1.

Optionally, the graphite negative electrode material has a tap density of 0.6 g/cm³~1.5 g/cm³.

Optionally, the graphite negative electrode material has a specific surface area of 0.1 m²/g~10 m²/g.

Optionally, the graphite negative electrode material has a median particle size of 5 µm~30 µm.

Optionally, the carbon coating layer has a thickness of 0.01 µm~5 µm.

Optionally, a mass content of carbon in the graphite negative electrode material is 95%~100%.

Optionally, the impact factor τ of the modifying group is τ=1.3σ_{B}+4.7σ_{P}+3.5σ_{N}, where σ_{B}, σ_{P}, and σ_{N} are greater than or equal to 0, σ_{B} is an impact factor of a B element-containing modifying group in the graphite negative electrode material, σ_{P} is an impact factor of a P element-containing modifying group in the graphite negative electrode material, and σ_{N} is an impact factor of an N element-containing modifying group in the graphite negative electrode material.

Optionally, σ_{B}, σ_{P}, and σ_{N} are not simultaneously 0.

Optionally, in Raman spectrum of the graphite negative electrode material, a value of a ratio I_{D}/I_{G} of a peak area I_{D} at 1350 cm⁻¹ to a peak area I_{G} at 1580 cm⁻¹ is n, 0<n≤5.

Optionally, the modifying group includes at least one of a -C-M- group and a -M-O- group.

Optionally, the B element-containing modifying group includes at least one of a -C-B₄- group, a -C-B₃- group, and a -BCO₂- group.

Optionally, the P element-containing modifying group includes at least one of a -P-O- group and a -P-C- group.

Optionally, the N element-containing modifying group includes at least one of a pyridine nitrogen group, a pyrrole nitrogen group, and a -C-N- group.

Optionally, the carbon coating layer is an amorphous carbon coating layer.

Optionally, the carbon coating layer is amorphous carbon, and the amorphous carbon is derived from at least one of asphalt, petroleum coke, smokeless coal, asphalt coke, coal based coke, resin, grease, alkanes, alkenes, alkynes, and aromatics.

Optionally, the carbon coating layer is amorphous carbon, the amorphous carbon is derived from asphalt, and the asphalt is at least one selected from the group consisting of petroleum asphalt, coal pitch, modified asphalt, and mesophase pitch.

The present disclosure provides a preparation method of a graphite negative electrode material, including steps of:
performing a thermal polymerization treatment on a mixture containing graphite, a coating agent, and a modifying additive, to obtain a precursor, wherein a mass ratio of the coating agent to the modifying additive is (1~99):1, the modifying additive includes an element M-containing compound, and the M is at least one selected from the group consisting of B, N, and P; and
performing a carbonization treatment on the precursor under a protective atmosphere, to obtain the graphite negative electrode material.

Optionally, the coating agent includes at least one of asphalt, petroleum coke, smokeless coal, asphalt coke, coal based coke, resin, grease, alkanes, alkenes, alkynes, and aromatics.

Optionally, the element M-containing compound includes at least one of an element M-containing organic substance, an element M-containing acid, and an element M-containing salt, where M is at least one selected from the group consisting of B, N, and P.

Optionally, an element M-containing organic substance includes at least one of amine organic substances, N-vinyl amide polymer organic substances, borane organic substances, alkyl boron organic substances, ester organic substances, phosphine organic substances, and carborane organic substances.

Optionally, an element M-containing inorganic acid is at least one selected from the group consisting of phosphoric acid, phosphorous acid, hypophosphorous acid, nitric acid, nitrous acid, hyponitrous acid, boracic acid, boric acid, and hypoboric acid.

Optionally, an element M-containing salt may include, but is not limited to, one of ammonium salt, sodium salt, potassium salt, lithium salt, magnesium salt, manganese salt, iron salt, cobalt salt, nickel salt, copper salt, and zinc salt.

Optionally, the graphite includes spherical graphite.

Optionally, the graphite has a median particle size of 5 µm~25 µm.

Optionally, a mass content of carbon in the spherical graphite is greater than or equal to 95%.

Optionally, the coating agent includes at least one of petroleum asphalt, coal pitch, modified asphalt, and mesophase pitch.

Optionally, the coating agent has a softening point of 80 °C~400 °C.

Optionally, the coating agent has a carbon residual value of 10%~80%.

Optionally, a mass ratio of the graphite to the coating agent is (1~99):1.

Optionally, the element M-containing compound includes at least one of an element M-containing organic substance, an element M-containing acid, and an element M-containing ammonium salt.

Optionally, the element M-containing organic substance includes at least one of melamine, polyvinylpyrrolidone, urea, N-methylpyrrolidone, borane, alkyl boron, phosphate, phosphonate, phosphinate, pentaphenylphosphine, methylene trihydrocarbylphosphine, and carborane.

Optionally, the element M-containing acid is at least one selected from the group consisting of phosphoric acid, nitric acid, and boracic acid.

Optionally, the element M-containing ammonium salt is at least one selected from the group consisting of ammonium phosphate, monoammonium phosphate, diammonium hydrogen phosphate, ammonium nitrate, ammonium sulfate, ammonium carbonate, and ammonium borate.

Optionally, the modifying additive includes at least one of urea, ammonium nitrate, sodium borate, ammonium sulfate, diammonium hydrogen phosphate, phosphoric acid, and ammonium phosphate.

Optionally, a reaction temperature of the thermal polymerization treatment is 150 °C~700 °C.

Optionally, reaction time of the thermal polymerization treatment is 1 h~5 h.

Optionally, a heating rate of the thermal polymerization treatment is 1 °C/min~5 °C/min.

Optionally, the protective atmosphere includes at least one of nitrogen gas, helium gas, neon gas, argon gas, krypton gas, and xenon gas.

Optionally, the protective atmosphere has a gas flow rate of 2 ml/s~100 ml/s.

Optionally, a reaction temperature of the carbonization treatment is 600 °C~1500 °C.

Optionally, reaction time of the carbonization treatment is 1 h~10 h.

Optionally, a heating rate of the carbonization treatment is 1 °C/min~5 °C/min.

Optionally, the method further includes: shaping natural flake graphite, to obtain spherical graphite.

Optionally, the shaping includes at least one of crushing, spheroidizing (balling) or classifying (grading).

Optionally, the spherical graphite has a tap density of 0.6 g/cm³~1.5 g/cm³.

The present disclosure further provides a graphite negative electrode material, wherein the graphite negative electrode material is prepared by the preparation method of a graphite negative electrode material according to any one of the above.

The present disclosure further provides a negative electrode, wherein the negative electrode contains the graphite negative electrode material according to any one of the above or the negative electrode prepared by the preparation method of a graphite negative electrode material according to any one of the above.

The present disclosure provides a lithium ion battery, wherein the lithium ion battery contains the graphite negative electrode material according to any one of the above or the graphite negative electrode material prepared by the preparation method of a graphite negative electrode material according to any one of the above.

### Brief Description of Drawings

FIG. 1 is a process flow diagram of a preparation method of a graphite negative electrode material provided by the present disclosure;
FIG. 2 is an electron micrograph of a graphite negative electrode material provided in Example 1 of the present disclosure;
FIG. 3 is an electron micrograph of a graphite negative electrode material provided in Example 2 of the present disclosure;
FIG. 4 is a Raman data graph of different sites of the graphite negative electrode material provided in Example 1 of the present disclosure;
FIG. 5 is a Raman data graph of different sites of the graphite negative electrode material provided in Example 2 of the present disclosure;
FIG. 6 is a schematic diagram of a capacity-voltage curve of the graphite negative electrode material provided in Example 1 of the present disclosure;
FIG. 7 is a schematic diagram of a capacity-voltage curve of the graphite negative electrode material provided in Example 2 of the present disclosure;
FIG. 8 is a schematic diagram of a cycle curve of the graphite negative electrode material provided in Example 1 of the present disclosure; and
FIG. 9 is a schematic diagram of a cycle curve of the graphite negative electrode material provided in Example 2 of the present disclosure.

### Detailed Description of Embodiments

In order to better illustrate the present disclosure and facilitate the understanding of the technical solutions of the present disclosure, the present disclosure will be further described in detail below. However, the following embodiments are merely simple examples of the present disclosure, and do not represent or limit the scope of protection of the present disclosure, and the scope of protection of the present disclosure is determined by the claims.

An embodiment of the present disclosure provides a graphite negative electrode material, wherein the graphite negative electrode material includes graphite and a carbon coating layer present on at least a part of a surface of the graphite, the carbon coating layer includes an M element-containing modifying group, where M is at least one selected from the group consisting of B, N, and P, and an impact factor τ of the modifying group has a value range of 0.5≤τ≤10.

An embodiment of the present disclosure provides a graphite negative electrode material, wherein the graphite negative electrode material includes:
graphite; and
a carbon coating layer, wherein
the carbon coating layer is present on at least a part of a surface of the graphite, a coating area ratio of coating the graphite by the carbon coating layer is 10%-100%; the carbon coating layer includes an M element-containing modifying group, where M is at least one selected from the group consisting of B, N, and P, and an impact factor τ of the modifying group has a value range of 0.5≤τ≤10.

In some embodiments, the carbon coating layer accounts for 10%-100% of a surface area of the graphite, for example, 20%-95%, 30%-90%, 40%-85% or 70-100%, such as 10%, 20%, 30%, 40%, 50%, 60%, 70%, 80%, 90%, 100%.

For the graphite negative electrode material provided in the present disclosure, while constructing a core-shell structure of the graphite negative electrode material, a specific group is introduced into the carbon coating layer for modification, and by controlling the range of the impact factor of each group, the carbon coating layer can reduce the side reactions of the coating layer and an electrolytic solution, the first efficiency of the graphite negative electrode material is improved, and meanwhile, the modified carbon coating layer also can effectively prevent anions and solvent molecules in the electrolytic solution from entering interior of particles, thus improving the expansion property of the natural graphite, and promoting the cycle performance.

In some embodiments, the graphite includes, but is not limited to, spherical graphite which is natural graphite. The natural graphite is flake graphite, is natural phanerocrystalline graphite, with a shape similar to fish scale, belongs to a hexagonal crystal system, is of a layered structure, and has good properties such as high temperature resistance, electrical conductivity, thermal conductivity, lubrication, plasticity, and acid and alkali resistance. In some embodiments, the graphite includes artificial graphite.

In some embodiments, the spherical graphite can be obtained by shaping graded materials in a spheroidizing process of natural flake graphite, and the shaped spherical graphite has a median particle size of 5 µm~25 µm, which may be, for example, 10 µm~25 µm, 5 µm~20 µm, or 15 µm~25 µm, such as 5 µm, 8 µm, 9 µm, 10 µm, 11 µm, 12 µm, 14 µm, 15 µm, 16 µm, 19 µm, 20 µm, or 25 µm, but is not merely limited to the listed numerical values, and other unlisted numerical values within the numerical ranges are also applicable. In some embodiments, the median particle size of the spherical graphite is 7 µm~20 µm. As used herein, the term "median particle size", i.e., D50, refers to a particle diameter just corresponding to an accumulated value of 50% in a cumulative distribution curve of particle volume.

In some embodiments, the spherical graphite can be obtained by shaping graded materials in a spheroidizing process of natural flake graphite, the shaped spherical graphite has a median particle size of 5 µm~25 µm, which may be, for example, 10 µm~25 µm, 5 µm~20 µm, or 15 µm~25 µm, such as 5 µm, 8 µm, 9 µm, 10 µm, 11 µm, 12 µm, 14 µm, 15 µm, 16 µm, 19 µm, 20 µm, or 25 µm, but is not merely limited to the listed numerical values, and other unlisted numerical values within the numerical ranges are also applicable. After multiple tests, it is found that by controlling the median particle size of the spherical graphite within the above ranges, it is beneficial to reducing a specific surface area of the spherical graphite, reducing contact between the spherical graphite and the electrolytic solution, and suppressing occurrence of side reactions. In some embodiments, the median particle size of the spherical graphite is 7 µm~20 µm.

In some embodiments, an average particle size of the graphite is 5 µm~25 µm. In some embodiments, the median particle size of the graphite negative electrode material is 5 µm~30 µm.

In some embodiments, a mass content of carbon in the spherical graphite is greater than or equal to 95%, and the mass content may be, for example, 95%-99%, 97%-99% or 95%-97%, such as 95%, 96%, 97%, 97.5%, 98.3%, 98.8% or 99%, but is not merely limited to the listed numerical values, and other unlisted numerical values within the numerical ranges are also applicable. In some embodiments, the mass content of carbon in the spherical graphite is greater than or equal to 99.95%.

In some embodiments, a mass ratio of the spherical graphite to the carbon coating layer is (1∼99):1, which may be, for example, (50~99):1, (1∼50):1 or (20~80):1, such as 1:1, 2:1, 10:1, 20:1, 30:1, 40:1, 50:1, 60:1, 70:1, 80:1 or 99:1, but is not merely limited to the listed numerical values, and other unlisted numerical values within the numerical ranges are also applicable. When the mass ratio of the carbon coating layer is too large, transmission efficiency of lithium ions is decreased, which is not conducive to high-rate charging and discharging of the material, and reduces the comprehensive performances of the negative electrode material. When the mass ratio of the carbon coating layer is too small, it is not conducive to increasing the electrical conductivity of the negative electrode material, and the performance of inhibiting volume expansion of the material is relatively weak, leading to relatively poor long cycle performance. In some embodiments, the mass ratio of the spherical graphite to the carbon coating layer is (5~99):1.

In some embodiments, the graphite negative electrode material has a tap density of 0.6 g/cm³~1.5 g/cm³, which may be, for example, 1.0 g/cm³~1.5 g/cm³, 0.6 g/cm³~1.0 g/cm³, or 0.8 g/cm³~1.2 g/cm³, such as 0.6 g/cm³, 0.7 g/cm³, 0.75 g/cm³, 0.8 g/cm³, 0.85 g/cm³, 0.9 g/cm³, 0.95 g/cm³, 1.0 g/cm³, 1.2 g/cm³, or 1.5 g/cm³, but is not merely limited to the listed numerical values, and other unlisted numerical values within the numerical ranges are also applicable. Through the filling and coating of the carbon material, pores of the spherical graphite are filled or blocked, then the porosity of the graphite negative electrode material is reduced, and the low porosity can effectively reduce the side reactions that occur during charging and discharging, thereby reducing electrode plate expansion and cycle performance degradation caused by the side reactions.

The graphite negative electrode material has a specific surface area of 0.1 m²/g~10 m²/g, which may be, for example, 1 m²/g~10 m²/g, 0.1 m²/g~5 m²/g or 0.5 m²/g~8 m²/g, such as 0.1 m²/g, 0.3 m²/g, 0.5 m²/g, 1.0 m²/g, 1.8 m²/g, 2.6 m²/g, 3.5 m²/g, 5.3 m²/g, 6.0 m²/g, 7.8 m²/g or 10 m²/g, and certainly may also be other numbers within the above ranges, which is not limited herein. The inventors found through many tests that, by controlling the specific surface area of the graphite negative electrode material within the above ranges, it is beneficial to improving the cycle performance of the lithium battery made of the negative electrode material.

In some embodiments, in Raman spectrum of the graphite negative electrode material, a value of a ratio I_{D}/I_{G (area)} of a peak intensity I_{D} at 1350 cm⁻¹ to a peak intensity I_{G} at 1580 cm⁻¹ is n; 0<n≤5, and the value n of I_{D}/I_{G} may be, for example, 1<n≤5, 0<n≤4 or 2<n≤4, such as 0.5, 1, 2, 3, 4.5, 4.8 or 5, but is not merely limited to the listed numerical values, and other unlisted numerical values within the numerical ranges are also applicable. When the ratio is too high, it indicates a high surface defect degree of the negative electrode material, formation of a solid electrolyte interface (SEI) film is increased, and more lithium ions are consumed, so that first efficiency of the battery is reduced.

In some embodiments, the modifying group includes at least one of a -C-M-group and a -M-O- group.

By X-ray photoelectron spectroscopy analysis (XPS), presence and content of each group are determined through an analysis result. Peak separation and fitting are performed on data of different elements by means of XPSPEAK41 software, and a content value of each modifying group is calculated by means of integration of area of a fitted peak. The largest fitted full width at half maximum FWHM is 1.8 eV, and the fitting is performed by a Lorentzian-Gaussian method.

In some embodiments, the carbon coating layer of the graphite negative electrode material contains a B element-containing modifying group, wherein the B element-containing modifying group includes at least one of a -C-B₄-group with a mass content of m₁%, a -C-B₃- group with a mass content of m₂%, a -BC₂O- group with a mass content of ms%, and a -BCO₂- group with a mass content of m₄%; and the B element-containing modifying group has an impact factor σ_{B}=(0.2m₁+0.2m₂+0.7m₃+0.5m₄)n/(m₁+m₂+m₃+m₄), where n=I_{D}/I_{G}. The -C-B₄- group has a characteristic peak at 188.9ev±0.1ev, the -C-B₃- group has a characteristic peak at 190.0ev±0.1ev, and the -BCO₂- group has a characteristic peak at 191.5ev±0.1ev.

In some embodiments, the carbon coating layer of the graphite negative electrode material contains a P element-containing modifying group, wherein the P element-containing modifying group includes a -P-O- group with a mass content of ms% and a -P-C- group with a mass content of m₆%; and the P element-containing modifying group has an impact factor σ_{P}=(0.3m₅+0.7m₆)n/(m₅+m₆). The -P-O- group has a characteristic peak at 133.7ev±0.1ev, and the -P-C- has a characteristic peak at 132.7ev±0.1ev.

In some embodiments, the carbon coating layer of the graphite negative electrode material contains an N element-containing modifying group, wherein the N element-containing modifying group includes at least one of a pyridine nitrogen group with a mass content of m₇%, a pyrrole nitrogen group with a mass content of m₈%, and a -C-N- group with a mass content of m₉%; and the N element-containing modifying group has an impact factor σ_{N}=(0.2m₇+0.3m₈+0.1m₉)n/(m₇+m₈+m₉). The pyridine nitrogen group has a characteristic peak at 398.4ev±0.1ev, the pyrrole nitrogen group has a characteristic peak at 399.7ev±0.1ev, and the -C-N- group has a characteristic peak at 400.6ev±0.1ev.

In some embodiments, the impact factor τ of the modifying group is τ=1.3σ_{B}+4.7σ_{P}+3.5σ_{N}, where σ_{B}, σ_{P}, and σ_{N} are greater than or equal to 0, and 0.5≤τ≤10. For example, a value of τ may be 0.5-10, 1-10, 1-9, 0.67-8.43, 0.99-8.43 or 0.99-6.11, such as 0.5, 0.6, 0.7, 0.8, 1, 1.5, 2.5, 2.9, 3.9, 4.8, 5.6, 6.7, 8, 8.8, 9 or 10, and certainly may also be other numbers within the above ranges, which is not limited herein. When the value of τ is too large, the modifying group has a relatively high content in the coating layer, which is more effective for co-intercalation of anions in the long cycle process, while the presence of excessive modifying groups may cause disordered structure of the coating layer, accompanied by significant increase in porosity, which causes great increase in irreversible reactions of first lithium intercalation and deintercalation of a product, and reduces the first charging and discharging efficiency of the product; when the value of τ is too small, it indicates a small number of effective modifying groups in the coating layer, then a modifying function of the groups cannot be exerted, which will cause problems of relatively low first efficiency and quick deterioration of capacity retention rate in the long cycle process of the product.

In some embodiments, the carbon coating layer is an amorphous carbon coating layer. The amorphous carbon has good compatibility with the electrolytic solution, and ensures the stability of electrical properties of the material during charging and discharging.

In some embodiments, the carbon coating layer has a thickness of 0.01 µm~5 µm, which may be, for example, 0.1 µm~5 µm, 0.01 µm~4 µm or 0.1 µm~4.5 µm, such as 0.01 µm, 0.5 µm, 1 µm, 1.8 µm, 2.4 µm, 3.5 µm, 3.9 µm, 4.7 µm, or 5 µm, which is not limited herein.

In some embodiments, the amorphous carbon in the carbon coating layer may be derived from at least one of asphalt, petroleum coke, smokeless coal, asphalt coke, coal based coke, resin, grease, alkanes, alkenes, alkynes, and aromatics.

In some embodiments, the asphalt is at least one selected from the group consisting of petroleum asphalt, coal pitch, modified asphalt, and mesophase pitch.

In some embodiments, the amorphous carbon in the carbon coating layer may be derived from at least one of petroleum asphalt, coal pitch, modified asphalt, and mesophase pitch.

In some embodiments, a mass content of carbon in the graphite negative electrode material is 95%~100%, which may be, for example, 95%~99%, 96%~100% or 96%~99%, such as 99.00%, 99.50%, 99.60%, 99.75%, 99.80%, 99.90%, 99.95% or 99.98%, and certainly may also be other values within the above ranges, which is not limited herein.

In some embodiments, the graphite negative electrode material has a median particle size of 5 µm~30 µm, which may be, for example, 8 µm~30 µm, 5 µm~25 µm or 8 µm~28 µm, such as 5 µm, 8 µm, 9 µm, 10 µm, 11 µm, 12 µm, 14 µm, 15 µm, 16 µm, 19 µm, 20 µm, 25 µm or 30 µm, which is not limited herein. An embodiment of the present disclosure provides a preparation method of a graphite negative electrode material, including the following steps:
performing a thermal polymerization treatment on a mixture containing graphite, a coating agent, and a modifying additive, to obtain a precursor, wherein a mass ratio of the coating agent to the modifying additive is (1~99):1, the modifying additive includes an element M-containing compound, and the M is at least one selected from the group consisting of B, N, and P; and
performing a carbonization treatment on the precursor, to obtain the graphite negative electrode material.

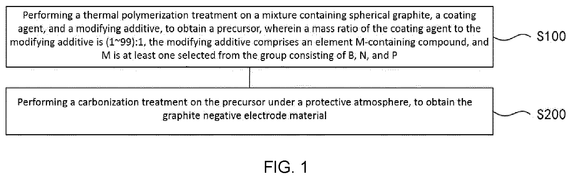

As shown in FIG. 1, an embodiment of the present disclosure provides a preparation method of a graphite negative electrode material, including the following steps:
S100, performing a thermal polymerization treatment on a mixture containing graphite, a coating agent, and a modifying additive, to obtain a precursor, wherein a mass ratio of the coating agent to the modifying additive is (1~99):1, the modifying additive includes an element M-containing compound, and the M is at least one selected from the group consisting of B, N, and P; and
S200, performing a carbonization treatment on the precursor (for example, under a protective atmosphere), to obtain the graphite negative electrode material.

In the preparation method of a graphite negative electrode material provided in the present disclosure, during the thermal polymerization treatment, the modifying additive reacts with the coating agent, and an M element-containing group is introduced in the carbon coating layer, then irreversible reactions of the negative electrode material and an electrolytic solution during a first cycle can be reduced, the first Coulombic efficiency of the natural graphite can be improved, meanwhile, the modified carbon coating layer can also effectively prevent anions and solvent molecules in the electrolytic solution from entering interior of particles, thus improving expansion property of the natural graphite, and improving the cycle performance.

In some embodiments, before step S100, the preparation method further includes:
shaping natural flake graphite, to obtain spherical graphite.

The natural flake graphite is natural phanerocrystalline graphite, with a shape similar to fish scale, belongs to a hexagonal crystal system, is of a layered structure, and has good properties such as high temperature resistance, electrical conductivity, thermal conductivity, lubrication, plasticity, and acid and alkali resistance.

In some embodiments, the shaping includes at least one of crushing, spheroidizing or classifying.

In some embodiments, the natural graphite can be shaped by spheroidizing, wherein a spheroidizing rate is controlled to be 500 r/min~5000 r/min, and spheroidizing time is 0.2~10 h.

In some embodiments, the shaped spherical graphite has a median particle size of 5 µm~25 µm, which may be, for example, 5 µm~20 µm, 10 µm~25 µm or 8 µm~24 µm, such as 5 µm, 8 µm, 9 µm, 10 µm, 11 µm, 12 µm, 14 µm, 15 µm, 16 µm, 19 µm, 20 µm or 25 µm, but is not merely limited to the listed numerical values. In some embodiments, the median particle size of the spherical graphite may be 7 µm~20 µm.

In some embodiments, the shaped spherical graphite has a median particle size of 5 µm~25 µm, which may be, for example, 5 µm~20 µm, 10 µm~25 µm or 8 µm~24 µm , such as 5 µm, 8 µm, 9 µm, 10 µm, 11 µm, 12 µm, 14 µm, 15 µm, 16 µm, 19 µm, 20 µm or 25 µm, but is not merely limited to the listed numerical values, and other unlisted numerical values within the numerical ranges are also applicable. After multiple tests, it is found that by controlling the median particle size of the spherical graphite within the above ranges, it is beneficial to reducing a specific surface area of the spherical graphite, reducing contact between the spherical graphite and the electrolytic solution, and suppressing occurrence of side reactions. In some embodiments, the median particle size of the spherical graphite may be 7 µm~20 µm.

In some embodiments, the graphite includes spherical graphite, and a mass content of carbon in the graphite is greater than or equal to 95%, which may be, for example, 95%-99%, 96%-99% or 95%-98%, such as 95%, 96%, 97%, 97.5%, 98.3%, 98.8% or 99%, but is not merely limited to the listed numerical values, and other unlisted numerical values within the numerical ranges are also applicable.

S100, performing a thermal polymerization treatment on a mixture containing graphite, a coating agent, and a modifying additive, to obtain a precursor, wherein the modifying additive includes an element M-containing compound, and the M is at least one selected from the group consisting of B, N, and P.

In some embodiments, the coating agent may be derived from at least one of asphalt, petroleum coke, smokeless coal, asphalt coke, coal based coke, resin, grease, alkanes, alkenes, alkynes, and aromatics.

In some embodiments, the asphalt may be derived from at least one of petroleum asphalt, coal pitch, modified asphalt, and mesophase pitch.

In some embodiments, the coating agent includes at least one of petroleum asphalt, coal pitch, modified asphalt, mesophase pitch, heavy oil, and coal tar.

In some embodiments, a mass ratio of the graphite to the coating layer is (1~99):1, which may be, for example, (1~80):1, (10~99):1 or (5~90):1, such as 1:1, 2:1, 10:1, 20:1, 30:1, 40:1, 50:1, 60:1, 70:1, 80:1 or 99:1, but is not merely limited to the listed numerical values, and other unlisted numerical values within the numerical ranges are also applicable. When the amount of the coating agent is too large, a thickness of the coating layer formed on the graphite is increased, transmission efficiency of lithium ions is decreased, which is not conducive to high-rate charging and discharging of the material, and reduces the comprehensive performances of the negative electrode material. When the amount of the coating agent is too small, the thickness of the coating layer formed on the graphite is decreased, which is not conducive to increasing the electrical conductivity of the negative electrode material, and the performance of inhibiting volume expansion of the material is relatively weak, leading to relatively poor long cycle performance. In some embodiments, the mass ratio of the graphite to the coating agent may be (5~30):1.

In some embodiments, the coating agent has a softening point of 80 °C~400 °C, which may be, for example, 100 °C~400 °C, 80 °C~350 °C or 90 °C~390 °C, such as 80 °C, 89 °C, 99 °C, 120 °C, 150 °C, 180 °C, 220 °C, 250 °C, 300 °C, 350 °C or 400 °C, but is not merely limited to the listed numerical values, and other unlisted numerical values within the numerical ranges are also applicable.

In some embodiments, the coating agent has a carbon residual value of 10%~80%, which may be, for example, 15%~80%, 10%~75% or 12%~78%, such as 10%, 20%, 35%, 45%, 50%, 55%, 60%, 70%, 78% or 80%, but is not merely limited to the listed numerical values, and other unlisted numerical values within the numerical ranges are also applicable. If the residual carbon of the coating agent is too low, a large amount of gas will escape during the thermal treatment, resulting in a large porosity of the coating layer, and further affecting the first efficiency and cycle performance of the product; and when the residual carbon value of the coating agent is too high, the coating agent cannot spread on a surface of a core material during the thermal treatment, and a complete effective coating layer cannot be formed, resulting in that part of a surface of the graphite core material is exposed, and is in direct contact with the electrolytic solution during the cycle, then side reactions occur, and solvent molecules in the electrolytic solution will be co-intercalated, causing cycle deterioration.

In some embodiments, the element M-containing compound includes at least one of an element M-containing organic substance, an element M-containing acid, and an element M-containing salt, where M is at least one selected from the group consisting of B, N, and P.

In some embodiments, the element M-containing salt may include, but is not limited to, one of ammonium salt, sodium salt, potassium salt, lithium salt, magnesium salt, manganese salt, iron salt, cobalt salt, nickel salt, copper salt, and zinc salt.

In some embodiments, the element M-containing compound includes at least one of an element M-containing organic substance, an element M-containing acid, and an element M-containing ammonium salt, where M is at least one selected from the group consisting of B, N, and P. In some embodiments, the element M-containing organic substance includes at least one of amine organic substances, N-vinyl amide polymer organic substances, borane organic substances, alkyl boron organic substances, ester organic substances, phosphine organic substances, and carborane organic substances.

In some embodiments, the amine organic substances include, but are not limited to, at least one of melamine or urea.

In some embodiments, the N-vinyl amide polymer organic substances include, but are not limited to, polyvinylpyrrolidone.

In some embodiments, the ester organic substances include, but are not limited to, at least one of phosphate, phosphonate, or phosphinate.

In some embodiments, the phosphine organic substances include, but are not limited to, at least one of pentaphenylphosphine or methylene trihydrocarbylphosphine.

In some embodiments, the element M-containing organic substance further includes an aza-cycloalkane compound, an aza-cycloolefin compound, and an aza-aromatic compound, for example, a pyrrolidone compound, such as N-methylpyrrolidone (nitrogen methylpyrrolidone).

In some embodiments, the element M-containing organic substance includes at least one of melamine, polyvinylpyrrolidone, urea, N-methylpyrrolidone, borane, alkyl boron, phosphate, phosphonate, phosphinate, pentaphenylphosphine, methylene trihydrocarbylphosphine, and carborane.

In some embodiments, the element M-containing acid includes an element M-containing acid. In some embodiments, an element M-containing inorganic acid is at least one selected from the group consisting of phosphoric acid, phosphorous acid, hypophosphorous acid, nitric acid, nitrous acid, hyponitrous acid, boracic acid, boric acid, and hypoboric acid.

In some embodiments, the element M-containing acid is at least one selected from the group consisting of phosphoric acid, nitric acid, and boracic acid.

In some embodiments, the element M-containing ammonium salt is at least one selected from the group consisting of ammonium phosphate, monoammonium phosphate, diammonium hydrogen phosphate, ammonium nitrate, ammonium sulfate, ammonium carbonate, and ammonium borate.

In some embodiments, the element M-containing sodium salt includes, but is not limited to, at least one of sodium borate, sodium nitrate, and sodium phosphate.

In some embodiments, the modifying additive includes at least one of urea, ammonium nitrate, ammonium sulfate, sodium borate, diammonium hydrogen phosphate, phosphoric acid, and ammonium phosphate.

In some embodiments, a mass ratio of the coating agent to the modifying additive is (1~99):1, which may be, for example, (5~99):1, (1~80):1 or (10~90):1, such as 1:1, 2:1, 10:1, 20:1, 30:1, 40:1, 50:1, 60:1, 70:1, 80:1 or 99:1, but is not merely limited to the listed numerical values, and other unlisted numerical values within the numerical ranges are also applicable. When the amount of the modifying additive is too large, the additive and the coating agent will react more violently, resulting in disordered structure of the coating layer, and negatively affecting the first efficiency and cycle performance of the product; and when the amount of the modifying additive is too small, an effective doping reaction of the modifying additive with the coating agent cannot occur, then a sufficient amount of effective modifying groups cannot be formed, thus it is difficult to improve the performance of the product.

In some embodiments, a reaction temperature of the thermal polymerization treatment is 150 °C~700 °C, which may be, for example, 200 °C~700 °C, 150 °C~650 °C or 210 °C~690 °C, such as 150 °C, 170 °C, 200 °C, 300 °C, 450 °C, 580 °C, 600 °C, 630 °C or 700 °C, but is not merely limited to the listed numerical values, and other unlisted numerical values within the numerical ranges are also applicable. If the reaction temperature of the thermal polymerization treatment is too high, more modifying additives themselves will be decomposed or condensed, and do not have effective reaction with the coating agent, and if the temperature of the thermal polymerization treatment is too low, activation energy required for the reaction cannot be achieved, then the reaction cannot occur, meanwhile, a too low temperature also will cause the coating agent not to liquefy, a small effective contact and reaction area, and low reaction efficiency; and in some embodiments, the reaction temperature of the thermal polymerization treatment is 200 °C~500 °C.

In some embodiments, reaction time of the thermal polymerization treatment is 1 h~5 h, which may be, for example, 1 h~4.5 h, 1.5 h~5 h or 1.5 h~4.5 h, such as 1 h, 2 h, 3 h, 3.2 h, 4.8 h or 5 h, but is not merely limited to the listed numerical values, and other unlisted numerical values within the numerical ranges are also applicable.

Optionally, a heating rate of the thermal polymerization treatment is 1 °C/min~5 °C/min, which may be, for example, 2 °C/min~5 °C/min, 1 °C/min~4 °C/min or 2 °C/min~4.5 °C/min, such as 1 °C/min, 2 °C/min, 3 °C/min, and 4 °C/min or 5 °C/min, but is not merely limited to the listed numerical values, and other unlisted numerical values within the numerical ranges are also applicable.

In the above process of thermal polymerization treatment, the softened coating agent can penetrate into pores of the graphite, and the modifying additive can react with the coating agent, such that an M element-containing compound reacts with the coating agent to form the modifying group, which specifically may be a B element-containing modifying group, a P element-containing modifying group, and an N element-containing modifying group, these modifying groups are doped in the coating agent, and an appropriate content of the groups is controlled, then after subsequent secondary thermal treatment, carbon of the coating layer can be modified, compatibility of the modified coating layer formed after carbonization of the coating agent and the electrolytic solution is improved, the side reactions of the coating layer and the electrolytic solution are reduced, and the first efficiency is improved. It is believed that, without being bound by theory, "pores of graphite" mentioned in the above strictly mean pores on the surface of the graphite, i.e., impurity elements are mainly doped in the coating layer on the surface of the graphite; and functional groups inside the these pores have the same function as those on the surface, and also satisfy the numerical ranges of the impact factor.

S200, performing a carbonization treatment on the precursor under a protective atmosphere, to obtain the graphite negative electrode material.

In some embodiments, a reaction temperature of the carbonization treatment is 600 °C~1500 °C, which may be, for example, 700 °C~1500 °C, 600 °C~1000 °C or 800 °C~1500 °C, such as 600 °C, 650 °C, 670 °C, 700 °C, 800 °C, 950 °C, 1080 °C, 1300 °C, 1400 °C or 1500 °C, but is not merely limited to the listed numerical values, and other unlisted numerical values within the numerical ranges are also applicable. It can be understood that a too high carbonization treatment temperature may lead to thermal decomposition of the modifying group, and cause escape of the modifying group, then a modification effect on the material cannot be formed; and a too low carbonization treatment temperature will lead to incomplete solidification and coking process of the coating agent, which causes great decrease in the electrical conductivity of the coating layer, significant increase in impedance of the product, and deterioration of product performances. In some embodiments, the reaction temperature of the carbonization treatment is 700 °C~1200 °C.

In some embodiments, reaction time of the carbonization treatment is 1 h~10 h, which may be, for example, 1 h~8 h, 3 h~10 h or 2 h~8 h, such as 1 h, 2 h, 3 h, 4 h, 5 h, 6 h, 7 h, 8 h or 10 h, but is not merely limited to the listed numerical values, and other unlisted numerical values within the numerical ranges are also applicable.

Optionally, a heating rate of the carbonization treatment is 1 °C/min~5 °C/min, which may be, for example, 1.5 °C/min~5 °C/min, 1 °C/min~4.5 °C/min or 1.5 °C/min~4.5 °C/min, such as 1 °C/min, 2 °C/min, 3 °C/min, 4 °C/min or 5 °C/min, but is not merely limited to the listed numerical values, and other unlisted numerical values within the numerical ranges are also applicable.

In some embodiments, the protective atmosphere includes at least one of nitrogen gas, helium gas, neon gas, argon gas, krypton gas, and xenon gas.

In some embodiments, the protective atmosphere has a gas flow rate of 2 ml/s~100 ml/s, which may be, for example, 5 ml/s~100 ml/s, 2 ml/s~80 ml/s, or 5 ml/s~90 mils, such as 2 mils, 5 mils, 10 mils, 15 mils, 20 mils, 30 mils, 50 ml/s, 60 ml/s, 70 ml/s, 89 ml/s, or 100 ml/s, which is not limited herein.

In some embodiments, a primary thermal treatment is carried out under stirring at a stirring rate of 10 r/min~500 r/min, which may be, for example, 100 r/min~500 r/min, 10 r/min~400 r/min or 50 r/min~490 r/min, such as 10 r/min, 50 r/min, 70 r/min, 100 r/min, 120 r/min, 150 r/min, 200 r/min, 300 r/min, 350 r/min, 400 r/min or 500 r/min, which is not limited herein. By performing the process of primary thermal treatment under stirring, the modifying additive and the coating agent are mixed more uniformly, and the reaction is also more uniform, but a too slow stirring speed will lead to low uniformity of modification and poor consistency of a final negative electrode material; while a too fast stirring speed will put relatively high requirements for equipment, and increases the costs.

In some specific embodiments, the primary thermal treatment is performed in a high-temperature reaction kettle equipped with a stirrer.

The present disclosure provides a negative electrode, wherein the negative electrode includes the graphite negative electrode material according to any one of the above or a graphite negative electrode material prepared by the preparation method of any one of the above.

The present disclosure provides a lithium ion battery, wherein the lithium ion battery contains the graphite negative electrode material according to any one of the above or a graphite negative electrode material prepared by the preparation method of any one of the above.

With regard to the above problems existing in the prior art, the present disclosure provides a graphite negative electrode material and a preparation method thereof, and a lithium ion battery. The graphite negative electrode material of the present disclosure has excellent electrochemical cycle and expansion suppression performances, can prolong the service lifetime of the lithium ion battery, and can reduce the production costs.

The present disclosure has the following beneficial effects.

For the graphite negative electrode material provided in the present disclosure, while constructing the core-shell structure of the graphite negative electrode material, a specific group is introduced into the carbon coating layer for modification, and by controlling the range of the impact factor of each group, the carbon coating layer can reduce the side reactions of the coating layer and the electrolytic solution, the first efficiency of the graphite negative electrode material is improved, and meanwhile, the modified carbon coating layer also can effectively prevent anions and solvent molecules in the electrolytic solution from entering the interior of the particles, thus improving the expansion property of the natural graphite, and promoting the cycle performance.

In another aspect, in the preparation method of a graphite negative electrode material provided in the present disclosure, during the thermal polymerization treatment, the modifying additive reacts with the coating agent, and the M element-containing group is introduced in the carbon coating layer, then the irreversible reactions of the negative electrode material and the electrolytic solution during the first cycle can be reduced, the first Coulombic efficiency of the natural graphite can be improved, meanwhile, the modified carbon coating layer can also effectively prevent anions and solvent molecules in the electrolytic solution from entering the interior of the particles, thus improving expansion property of the natural graphite, and improving the cycle performance.

### Example

Examples of the present disclosure are further described through multiple examples. The examples of the present disclosure are not limited to the following specific examples. Appropriate modifications can be made within the scope of protection.

### Example 1

(1) Flake graphite with a particle size of about 195 mesh was selected and subjected to crushing, spheroidizing, classifying, and purifying, to obtain spherical graphite, wherein the spherical graphite had a median particle size D₅₀ of 15 µm.
(2) The spherical graphite, a coating agent petroleum asphalt (a softening point of 150 °C, and a residual carbon content of 45%), and a modifying additive monoammonium phosphate were mixed, where a mass ratio of the spherical graphite to the coating agent petroleum asphalt was 90/10, and a mass ratio of the coating agent to the modifying additive monoammonium phosphate was 90/10, and after the mixing, a thermal polymerization treatment was performed in a high-temperature reaction kettle, with a high-purity nitrogen gas being introduced as a protective gas into the reaction kettle, wherein a temperature of the thermal polymerization treatment was 550 °C, and treatment time was 3 h, to obtain a precursor.
(3) A carbonization treatment was performed on the precursor in a carbonization kiln under a nitrogen atmosphere, wherein a gas flow rate was 20 ml/s, a temperature of the carbonization treatment was 800 °C, and treatment time was 5 h, thereby obtaining the graphite negative electrode material.

The graphite negative electrode material prepared in the present example included the spherical graphite and a carbon coating layer, wherein the carbon coating layer was completely coated on a surface of the spherical graphite, the carbon coating layer accounted for about 100% of a surface area of the graphite, and the carbon coating layer had a modifying group; the graphite negative electrode material had a median particle size (D₅₀) of 15.7 µm, a tap density of 1.08 g/cm³, and a specific surface area of 2.4 m²/g. The carbon coating layer of the graphite negative electrode material was 0.4 µm, and a carbon content in the graphite negative electrode material was 99.90%.

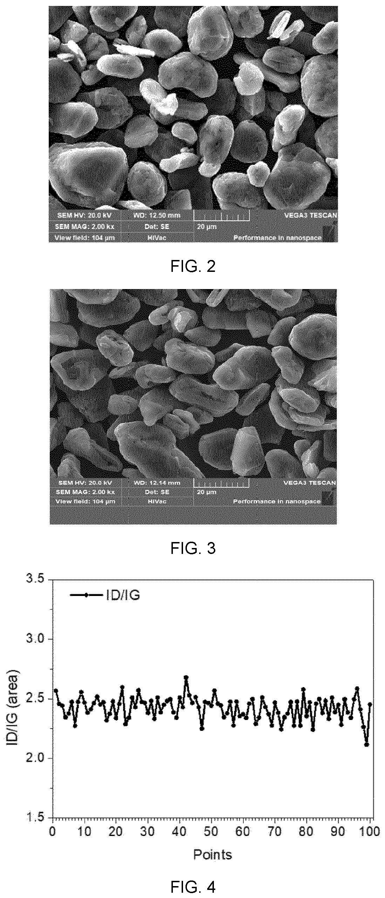

Referring to FIG. 2 and FIG. 4, which are respectively an electron micrograph and a Raman data graph of the graphite negative electrode material prepared according to Example 1 of the present disclosure, the carbon coating layer is completely coated on the surface of the spherical graphite, the graphite particle completely coated has a relatively smooth surface, flake wrinkled layers are not apparent (see FIG. 2), and Raman I_{D}/I_{G} values at different sites are relatively stable, with reference to FIG. 4, Raman data (i.e., Raman data of I_{D}/I_{G} value) graph of 100 different sites of the graphite negative electrode material.

By Raman spectroscopy, a value n of the ratio I_{D}/I_{G} of peak intensity I_{D} at 1350 cm⁻¹ to peak intensity I_{G} at 1580 cm⁻¹ of the graphite negative electrode material was 2.44.

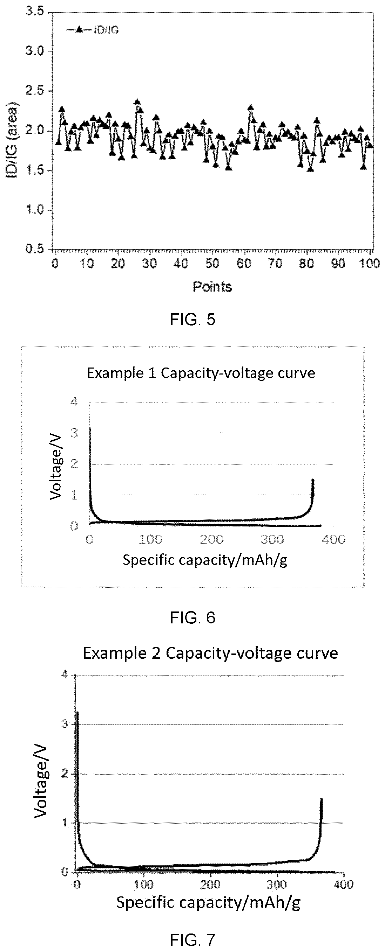

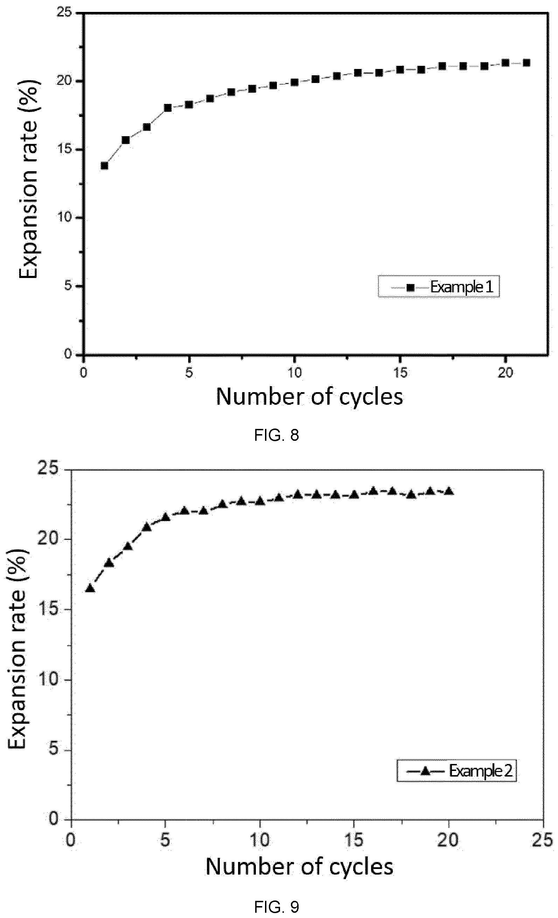

By infrared spectra analysis, groups containing P and N were measured in the carbon coating layer of the graphite negative electrode material, wherein the modifying group containing P had an impact factor σ_{P}=0.530 and the modifying group containing N had an impact factor σ_{N}=0.423, where τ=4.7σ_{P}+3.5σ_{N}=3.97. A capacity-voltage curve relationship of Example 1 in an electrochemical test below is shown in FIG. 6, and an electrochemical cycle expansion rate curve is shown in FIG. 8.

### Example 2

(1) Flake graphite with a particle size of about 195 mesh was selected and subjected to crushing, spheroidizing, classifying, and purifying, to obtain spherical graphite, wherein the spherical graphite had a median particle size D₅₀ of 15 µm.
(2) The spherical graphite, a coating agent petroleum asphalt (a softening point of 150 °C, and a residual carbon content of 45%), and a modifying additive urea were mixed, where a mass ratio of the spherical graphite to the coating agent petroleum asphalt was 90/10, and a mass ratio of the coating agent to the modifying additive urea was 90/10, and after the mixing, a thermal polymerization treatment was performed in a high-temperature reaction kettle, with a high-purity nitrogen gas being introduced as a protective gas into the reaction kettle, wherein a temperature of the thermal polymerization treatment was 550 °C, and treatment time was 5 h, to obtain a precursor.
(3) A carbonization treatment was performed on the precursor in a carbonization kiln under a nitrogen atmosphere, wherein a gas flow rate was 20 ml/s, a temperature of the carbonization treatment was 800 °C, and treatment time was 5 h, thereby obtaining the graphite negative electrode material.

The graphite negative electrode material prepared in the present example included the spherical graphite and a carbon coating layer, wherein the carbon coating layer was completely coated on a surface of the spherical graphite, the carbon coating layer accounted for about 100% of a surface area of the graphite, and the carbon coating layer had a modifying group; the graphite negative electrode material had a median particle size (D₅₀) of 15.2 µm, a tap density of 1.01 g/cm³, and a specific surface area of 3.5 m²/g. The carbon coating layer of the graphite negative electrode material was 0.2 µm, and a carbon content in the graphite negative electrode material was 99.93%.

Referring to FIG. 3 and FIG. 5, which are respectively an electron micrograph and a Raman data graph of the graphite negative electrode material prepared according to Example 2 of the present disclosure, with reference to FIG. 3, the carbon coating layer is also uniformly coated on the surface of the spherical graphite, the coating layer has a relatively smooth surface, flake wrinkled layers are not apparent (see FIG. 5), and Raman I_{D}/I_{G} values at different sites are relatively stable, with reference to FIG. 5, Raman data (i.e., Raman data of I_{D}/I_{G} value) graph of 100 different sites of the graphite negative electrode material.

By Raman spectroscopy, a value n of the ratio I_{D}/I_{G} of peak intensity I_{D} at 1350 cm⁻¹ to peak intensity I_{G} at 1580 cm⁻¹ of the graphite negative electrode material was 1.9.

By infrared spectra analysis, a group containing N was measured in the carbon coating layer of the graphite negative electrode material, wherein the group containing N had an impact factor τ=5.32.

A capacity-voltage curve relationship of Example 2 in an electrochemical test below is shown in FIG. 7, and an electrochemical cycle expansion rate curve is shown in FIG. 9. It should be noted that, in the following examples, no matter whether the carbon coating layer is completely or partially coated on the graphite, the carbon coating layer still can be uniformly coated on the surface of the spherical graphite, the surface of the coating layer is also relatively smooth, and the flake wrinkled layers are not apparent.

### Example 3

(1) Flake graphite with a particle size of about 195 mesh was selected and subjected to crushing, spheroidizing, classifying, and purifying, to obtain spherical graphite, wherein the spherical graphite had a median particle size D₅₀ of 15 µm.
(2) The spherical graphite, a coating agent petroleum asphalt (a softening point of 150 °C, and a residual carbon content of 45%), and a modifying additive ammonium nitrate were mixed, where a mass ratio of the spherical graphite to the coating agent petroleum asphalt was 90/10, and a mass ratio of the coating agent to the modifying additive ammonium nitrate was 90/10, and after the mixing, a thermal polymerization treatment was performed in a high-temperature reaction kettle, with a high-purity nitrogen gas being introduced as a protective gas into the reaction kettle, wherein a temperature of the thermal polymerization treatment was 550 °C, and treatment time was 5 h, to obtain a precursor.
(3) A carbonization treatment was performed on the precursor in a carbonization kiln under a nitrogen atmosphere, wherein a gas flow rate was 20 ml/s, a temperature of the carbonization treatment was 800 °C, and treatment time was 5 h, thereby obtaining the graphite negative electrode material.

The graphite negative electrode material prepared in the present example included the spherical graphite and a carbon coating layer, wherein the carbon coating layer was completely coated on a surface of the spherical graphite, the carbon coating layer accounted for about 100% of a surface area of the graphite, and the carbon coating layer had a modifying group; the graphite negative electrode material had a median particle size (D₅₀) of 15.5 µm, a tap density of 3.8 g/cm³, and a specific surface area of 2.9 m²/g. The carbon coating layer of the graphite negative electrode material was 0.4 µm, and a carbon content in the graphite negative electrode material was 99.87%.

By Raman spectroscopy, a value n of the ratio I_{D}/I_{G} of peak intensity I_{D} at 1350 cm⁻¹ to peak intensity I_{G} at 1580 cm⁻¹ of the graphite negative electrode material was 1.8.

By infrared spectra analysis, a group containing N was measured in the carbon coating layer of the graphite negative electrode material, wherein the modifying group containing N had an impact factor τ=5.33.

### Example 4

(1) Flake graphite with a particle size of about 195 mesh was selected and subjected to crushing, spheroidizing, classifying, and purifying, to obtain spherical graphite, wherein the spherical graphite had a median particle size D₅₀ of 11 µm.
(2) The spherical graphite, a coating agent petroleum asphalt (a softening point of 180 °C, and a residual carbon content of 65%), and a modifying additive urea were mixed, where a mass ratio of the spherical graphite to the coating agent petroleum asphalt was 95/5, and a mass ratio of the coating agent to the modifying additive urea was 92/8, and after the mixing, a thermal polymerization treatment was performed in a high-temperature reaction kettle, with a high-purity nitrogen gas being introduced as a protective gas into the reaction kettle, wherein a temperature of the thermal polymerization treatment was 600 °C, and treatment time was 3 h, to obtain a precursor.
(3) A carbonization treatment was performed on the precursor in a carbonization kiln under a nitrogen atmosphere, wherein a gas flow rate was 20 ml/s, a temperature of the carbonization treatment was 900 °C, and treatment time was 3 h, thereby obtaining the graphite negative electrode material.

The graphite negative electrode material prepared in the present example included the spherical graphite and a carbon coating layer, wherein the carbon coating layer was substantially coated on a surface of the spherical graphite, the carbon coating layer accounted for about 96% of a surface area of the graphite, and the carbon coating layer had a modifying group; the graphite negative electrode material had a median particle size (D₅₀) of 11.8 µm, a tap density of 0.94 g/cm³, and a specific surface area of 5.1 m²/g. The carbon coating layer of the graphite negative electrode material was 0.1 µm, and a carbon content in the graphite negative electrode material was 99.91%.

By Raman spectroscopy, a value n of the ratio I_{D}/I_{G} of peak intensity I_{D} at 1350 cm⁻¹ to peak intensity I_{G} at 1580 cm⁻¹ of the graphite negative electrode material was 2.5.

By infrared spectra analysis, a group containing N was measured in the carbon coating layer of the graphite negative electrode material, wherein the group containing N had an impact factor τ=6.01.

### Example 5

(1) Flake graphite with a particle size of about 195 mesh was selected and subjected to crushing, spheroidizing, classifying, and purifying, to obtain spherical graphite, wherein the spherical graphite had a median particle size D50 of 18 µm.
(2) The spherical graphite, a coating agent petroleum asphalt (a softening point of 180 °C, and a residual carbon content of 65%), and a modifying additive urea were mixed, where a mass ratio of the spherical graphite to the coating agent petroleum asphalt was 95/5, and a mass ratio of the coating agent to the modifying additive urea was 80/20, and after the mixing, a thermal polymerization treatment was performed in a high-temperature reaction kettle, with a high-purity nitrogen gas being introduced as a protective gas into the reaction kettle, wherein a temperature of the thermal polymerization treatment was 600 °C, and treatment time was 3 h, to obtain a precursor.
(3) A carbonization treatment was performed on the precursor in a carbonization kiln under a nitrogen atmosphere, wherein a gas flow rate was 20 ml/s, a temperature of the carbonization treatment was 1000 °C, and treatment time was 3 h, thereby obtaining the graphite negative electrode material.

The graphite negative electrode material prepared in the present example included the spherical graphite and a carbon coating layer, wherein the carbon coating layer was substantially coated on a surface of the spherical graphite, the carbon coating layer accounted for about 92% of a surface area of the graphite, and the carbon coating layer had a modifying group; the graphite negative electrode material had a median particle size (D₅₀) of 18.4 µm, a tap density of 1.19 g/cm³, and a specific surface area of 4.2 m²/g. The carbon coating layer of the graphite negative electrode material was 2.8 µm, and a carbon content in the graphite negative electrode material was 99.95%.

By Raman spectroscopy, a value n of the ratio I_{D}/I_{G} of peak intensity I_{D} at 1350 cm⁻¹ to peak intensity I_{G} at 1580 cm⁻¹ of the graphite negative electrode material was 2.9.

By infrared spectra analysis, a group containing N was measured in the carbon coating layer of the graphite negative electrode material, wherein the group containing N had an impact factor τ=6.11.

### Example 6

(1) Flake graphite with a particle size of about 195 mesh was selected and subjected to crushing, spheroidizing, classifying, and purifying, to obtain spherical graphite, wherein the spherical graphite had a median particle size D₅₀ of 11 µm.
(2) The spherical graphite, a coating agent petroleum asphalt (a softening point of 250 °C, and a residual carbon content of 75%), and a modifying additive sodium borate were mixed, where a mass ratio of the spherical graphite to the coating agent petroleum asphalt was 95/5, and a mass ratio of the coating agent to the modifying additive sodium borate was 80/20, and after the mixing, a thermal polymerization treatment was performed in a high-temperature reaction kettle, with a high-purity nitrogen gas being introduced as a protective gas into the reaction kettle, wherein a temperature of the thermal polymerization treatment was 600 °C, and treatment time was 3 h, to obtain a precursor.
(3) A carbonization treatment was performed on the precursor in a carbonization kiln under a nitrogen atmosphere, wherein a gas flow rate was 20 ml/s, a temperature of the carbonization treatment was 950 °C, and treatment time was 5 h, thereby obtaining the graphite negative electrode material.

The graphite negative electrode material prepared in the present example included the spherical graphite and a carbon coating layer, wherein the carbon coating layer was substantially coated on a surface of the spherical graphite, the carbon coating layer accounted for about 95% of a surface area of the graphite, and the carbon coating layer had a modifying group; the graphite negative electrode material had a median particle size (D₅₀) of 11.2 µm, a tap density of 0.88 g/cm³, and a specific surface area of 3.6 m²/g. The carbon coating layer of the graphite negative electrode material was 2.5 µm, and a carbon content in the graphite negative electrode material was 99.87%.

By Raman spectroscopy, a value n of the ratio I_{D}/I_{G} of peak intensity I_{D} at 1350 cm⁻¹ to peak intensity I_{G} at 1580 cm⁻¹ of the graphite negative electrode material was 2.5.

By infrared spectra analysis, a group containing B was measured in the carbon coating layer of the graphite negative electrode material, wherein the group containing B had an impact factor τ=0.67.

### Example 7

(1) Flake graphite with a particle size of about 195 mesh was selected and subjected to crushing, spheroidizing, classifying, and purifying, to obtain spherical graphite, wherein the spherical graphite had a median particle size D₅₀ of 11 µm.
(2) The spherical graphite, a coating agent petroleum asphalt (a softening point of 180 °C, and a residual carbon content of 65%), and a modifying additive ammonium sulfate were mixed, where a mass ratio of the spherical graphite to the coating agent petroleum asphalt was 90/10, and a mass ratio of the coating agent to the modifying additive ammonium sulfate was 90/10, and after the mixing, a thermal polymerization treatment was performed in a high-temperature reaction kettle, with a high-purity nitrogen gas being introduced as a protective gas into the reaction kettle, wherein a temperature of the thermal polymerization treatment was 450 °C, and treatment time was 5 h, to obtain a precursor.
(3) A carbonization treatment was performed on the precursor in a carbonization kiln under a nitrogen atmosphere, wherein a gas flow rate was 20 ml/s, a temperature of the carbonization treatment was 800 °C, and treatment time was 3 h, thereby obtaining the graphite negative electrode material.

The graphite negative electrode material prepared in the present example included the spherical graphite and a carbon coating layer, wherein the carbon coating layer was completely coated on a surface of the spherical graphite, the carbon coating layer accounted for about 100% of a surface area of the graphite, and the carbon coating layer had a modifying group; the graphite negative electrode material had a median particle size (D₅₀) of 11.6 µm, a tap density of 0.92 g/cm³, and a specific surface area of 3.3 m²/g. The carbon coating layer of the graphite negative electrode material was 0.7 µm, and a carbon content in the graphite negative electrode material was 99.96%.

By Raman spectroscopy, a value n of the ratio I_{D}/I_{G} of peak intensity I_{D} at 1350 cm⁻¹ to peak intensity I_{G} at 1580 cm⁻¹ of the graphite negative electrode material was 0.8.

By infrared spectra analysis, a group containing N was measured in the carbon coating layer of the graphite negative electrode material, wherein the group containing N had an impact factor τ=0.99.

### Example 8

(1) Flake graphite with a particle size of about 195 mesh was selected and subjected to crushing, spheroidizing, classifying, and purifying, to obtain spherical graphite, wherein the spherical graphite had a median particle size D₅₀ of 15 µm.
(2) The spherical graphite, a coating agent petroleum asphalt (a softening point of 150 °C, and a residual carbon content of 45%), and a modifying additive ammonium nitrate were mixed, where a mass ratio of the spherical graphite to the coating agent petroleum asphalt was 90/10, and a mass ratio of the coating agent to the modifying additive ammonium nitrate was 90/10, and after the mixing, a thermal polymerization treatment was performed in a high-temperature reaction kettle, with a high-purity nitrogen gas being introduced as a protective gas into the reaction kettle, wherein a temperature of the thermal polymerization treatment was 120 °C, and treatment time was 5 h, to obtain a precursor.
(3) A carbonization treatment was performed on the precursor in a carbonization kiln under a nitrogen atmosphere, wherein a gas flow rate was 20 ml/s, a temperature of the carbonization treatment was 600 °C, and treatment time was 5 h, thereby obtaining the graphite negative electrode material.

The graphite negative electrode material prepared in the present example included the spherical graphite and a carbon coating layer, wherein the carbon coating layer was completely coated on a surface of the spherical graphite, the carbon coating layer accounted for about 100% of a surface area of the graphite, and the carbon coating layer had a modifying group; the graphite negative electrode material had a median particle size (D₅₀) of 15.9 µm, a tap density of 0.86 g/cm³, and a specific surface area of 0.8 m²/g. The carbon coating layer of the graphite negative electrode material was 1.2 µm, and a carbon content in the graphite negative electrode material was 98.30%.

By Raman spectroscopy, a value n of the ratio I_{D}/I_{G} of peak intensity I_{D} at 1350 cm⁻¹ to peak intensity I_{G} at 1580 cm⁻¹ of the graphite negative electrode material was 4.7.

By infrared spectra analysis, a group containing N was measured in the carbon coating layer of the graphite negative electrode material, wherein the group containing N had an impact factor τ=8.43.

### Example 9

(1) Flake graphite with a particle size of about 195 mesh was selected and subjected to crushing, spheroidizing, classifying, and purifying, to obtain spherical graphite, wherein the spherical graphite had a median particle size D₅₀ of 15 µm.
(2) The spherical graphite, a coating agent petroleum asphalt (a softening point of 150 °C, and a residual carbon content of 45%), and a modifying additive sodium borate were mixed, where a mass ratio of the spherical graphite to the coating agent petroleum asphalt was 90/10, and a mass ratio of the coating agent to the modifying additive sodium borate was 90/10, and after the mixing, a thermal polymerization treatment was performed in a high-temperature reaction kettle, with a high-purity nitrogen gas being introduced as a protective gas into the reaction kettle, wherein a temperature of the thermal polymerization treatment was 550 °C, and treatment time was 5 h, to obtain a precursor.
(3) A carbonization treatment was performed on the precursor in a carbonization kiln under a nitrogen atmosphere, wherein a gas flow rate was 20 ml/s, a temperature of the carbonization treatment was 800 °C, and treatment time was 5 h, thereby obtaining the graphite negative electrode material.

The graphite negative electrode material prepared in the present example included the spherical graphite and a carbon coating layer, wherein the carbon coating layer was completely coated on a surface of the spherical graphite, the carbon coating layer accounted for about 100% of a surface area of the graphite, and the carbon coating layer had a modifying group; the graphite negative electrode material had a median particle size (D₅₀) of 15.4 µm, a tap density of 0.89 g/cm³, and a specific surface area of 3.1 m²/g. The carbon coating layer of the graphite negative electrode material was 0.37 µm, and a carbon content in the graphite negative electrode material was 99.92%.

By Raman spectroscopy, a value n of the ratio I_{D}/I_{G} of peak intensity I_{D} at 1350 cm⁻¹ to peak intensity I_{G} at 1580 cm⁻¹ of the graphite negative electrode material was 2.1.

By infrared spectra analysis, a group containing B was measured in the carbon coating layer of the graphite negative electrode material, wherein the group containing B had an impact factor τ=4.52.

### Example 10

(1) Flake graphite with a particle size of about 195 mesh was selected and subjected to crushing, spheroidizing, classifying, and purifying, to obtain spherical graphite, wherein the spherical graphite had a median particle size D50 of 15 µm.
(2) The spherical graphite, a coating agent petroleum asphalt (a softening point of 150 °C, and a residual carbon content of 45%), and a modifying additive ethyl phosphate were mixed, where a mass ratio of the spherical graphite to the coating agent petroleum asphalt was 90/10, and a mass ratio of the coating agent to the modifying additive ethyl phosphate was 90/10, and after the mixing, a thermal polymerization treatment was performed in a high-temperature reaction kettle, with a high-purity nitrogen gas being introduced as a protective gas into the reaction kettle, wherein a temperature of the thermal polymerization treatment was 550 °C, and treatment time was 5 h, to obtain a precursor.
(3) A carbonization treatment was performed on the precursor in a carbonization kiln under a nitrogen atmosphere, wherein a gas flow rate was 20 ml/s, a temperature of the carbonization treatment was 800 °C, and treatment time was 5 h, thereby obtaining the graphite negative electrode material.

The graphite negative electrode material prepared in the present example included the spherical graphite and a carbon coating layer, wherein the carbon coating layer was completely coated on a surface of the spherical graphite, the carbon coating layer accounted for about 100% of a surface area of the graphite, and the carbon coating layer had a modifying group; the graphite negative electrode material had a median particle size (D₅₀) of 15.6 µm, a tap density of 0.92 g/cm³, and a specific surface area of 2.9 m²/g. The carbon coating layer of the graphite negative electrode material was 0.45 µm, and a carbon content in the graphite negative electrode material was 99.89%.

By Raman spectroscopy, a value n of the ratio I_{D}/I_{G} of peak intensity I_{D} at 1350 cm⁻¹ to peak intensity I_{G} at 1580 cm⁻¹ of the graphite negative electrode material was 2.7.

By infrared spectra analysis, a group containing P was measured in the carbon coating layer of the graphite negative electrode material, wherein the group containing P had an impact factor τ=5.12.

### Example 11

(1) Flake graphite with a particle size of about 195 mesh was selected and subjected to crushing, spheroidizing, classifying, and purifying, to obtain spherical graphite, wherein the spherical graphite had a median particle size D₅₀ of 15 µm.
(2) The spherical graphite, a coating agent petroleum asphalt (a softening point of 150 °C, and a residual carbon content of 45%), and a modifying additive boracic acid were mixed, where a mass ratio of the spherical graphite to the coating agent petroleum asphalt was 90/10, and a mass ratio of the coating agent to the modifying additive boracic acid was 90/10, and after the mixing, a thermal polymerization treatment was performed in a high-temperature reaction kettle, with a high-purity nitrogen gas being introduced as a protective gas into the reaction kettle, wherein a temperature of the thermal polymerization treatment was 550 °C, and treatment time was 5 h, to obtain a precursor.
(3) A carbonization treatment was performed on the precursor in a carbonization kiln under a nitrogen atmosphere, wherein a gas flow rate was 20 ml/s, a temperature of the carbonization treatment was 800 °C, and treatment time was 5 h, thereby obtaining the graphite negative electrode material.

The graphite negative electrode material prepared in the present example included the spherical graphite and a carbon coating layer, wherein the carbon coating layer was completely coated on a surface of the spherical graphite, the carbon coating layer accounted for about 100% of a surface area of the graphite, and the carbon coating layer had a modifying group; the graphite negative electrode material had a median particle size (D₅₀) of 15.5 µm, a tap density of 0.94 g/cm³, and a specific surface area of 3.2 m²/g. The carbon coating layer of the graphite negative electrode material was 0.54 µm, and a carbon content in the graphite negative electrode material was 99.91%.

By Raman spectroscopy, a value n of the ratio I_{D}/I_{G} of peak intensity I_{D} at 1350 cm⁻¹ to peak intensity I_{G} at 1580 cm⁻¹ of the graphite negative electrode material was 2.4.

By infrared spectra analysis, a group containing B was measured in the carbon coating layer of the graphite negative electrode material, wherein the group containing B had an impact factor τ=4.81.

### Comparative Example 1

(1) Flake graphite with a particle size of about 195 mesh was selected and subjected to crushing, spheroidizing, classifying, and purifying, to obtain spherical graphite, wherein the spherical graphite had a median particle size D₅₀ of 15 µm.
(2) The spherical graphite and a coating agent petroleum asphalt (a softening point of 180 °C, and a residual carbon content of 65%) were mixed at a mass ratio of 90/10, no modifying additive was added, and after the mixing, a thermal polymerization treatment was performed in a high-temperature reaction kettle, with a high-purity nitrogen gas being introduced as a protective gas into the reaction kettle, wherein a temperature of the thermal polymerization treatment was 600 °C, and treatment time was 5 h, to obtain a precursor.
(3) A carbonization treatment was performed on the precursor in a carbonization kiln under a nitrogen atmosphere, wherein a gas flow rate was 20 ml/s, a temperature of the carbonization treatment was 1000 °C, and treatment time was 5 h, thereby obtaining the graphite negative electrode material.

The graphite negative electrode material prepared in the present comparative example had a median particle size (D₅₀) of 15.9 µm, a tap density of 1.03 g/cm³, and a specific surface area of 2.9 m²/g. The carbon coating layer of the graphite negative electrode material was 0.3 µm, and a carbon content in the graphite negative electrode material was 99.98%, wherein the carbon coating layer is completely coated on the surface of the spherical graphite, and the carbon coating layer accounted for about 100% of a surface area of the graphite.

By Raman spectroscopy, a value n of the ratio I_{D}/I_{G} of peak intensity I_{D} at 1350 cm⁻¹ to peak intensity I_{G} at 1580 cm⁻¹ of the graphite negative electrode material was 1.6.

### Comparative Example 2

(1) Flake graphite with a particle size of about 195 mesh was selected and subjected to crushing, spheroidizing, classifying, and purifying, to obtain spherical graphite, wherein the spherical graphite had a median particle size D₅₀ of 15 µm.
(2) The spherical graphite, a coating agent petroleum asphalt (a softening point of 150 °C, and a residual carbon content of 45%), and a modifying additive monoammonium phosphate were mixed, where a mass ratio of the spherical graphite to the coating agent petroleum asphalt was 90/10, and a mass ratio of the coating agent to the modifying additive monoammonium phosphate was 90/0.8, and after the mixing, a thermal polymerization treatment was performed in a high-temperature reaction kettle, with a high-purity nitrogen gas being introduced as a protective gas into the reaction kettle, wherein a temperature of the thermal polymerization treatment was 550 °C, and treatment time was 3 h, to obtain a precursor.
(3) A carbonization treatment was performed on the precursor in a carbonization kiln under a nitrogen atmosphere, wherein a gas flow rate was 20 ml/s, a temperature of the carbonization treatment was 800 °C, and treatment time was 5 h, thereby obtaining the graphite negative electrode material.

The graphite negative electrode material prepared in the present comparative example included the spherical graphite and a carbon coating layer, wherein the carbon coating layer was completely coated on a surface of the spherical graphite, the carbon coating layer accounted for about 100% of a surface area of the graphite, and the carbon coating layer had a modifying group; the graphite negative electrode material had a median particle size (D₅₀) of 15.7 µm, a tap density of 1.08 g/cm³, and a specific surface area of 2.1 m²/g. The carbon coating layer of the graphite negative electrode material was 0.4 µm, and a carbon content in the graphite negative electrode material was 99.97%.

By Raman spectroscopy, a value n of the ratio I_{D}/I_{G} of peak intensity I_{D} at 1350 cm⁻¹ to peak intensity I_{G} at 1580 cm⁻¹ of the graphite negative electrode material was 1.82.

By XPS analysis, groups containing P and N were measured in the carbon coating layer of the graphite negative electrode material, wherein the groups containing P and N had an impact factor τ=0.3.

### Comparative Example 3

(1) Flake graphite with a particle size of about 195 mesh was selected and subjected to crushing, spheroidizing, classifying, and purifying, to obtain spherical graphite, wherein the spherical graphite had a median particle size D₅₀ of 15 µm.
(2) The spherical graphite, a coating agent petroleum asphalt (a softening point of 150 °C, and a residual carbon content of 45%), and a modifying additive sulfur ether were mixed, where a mass ratio of the spherical graphite to the coating agent petroleum asphalt was 90/10, and a mass ratio of the coating agent to the modifying additive sulfur ether was 90/10, and after the mixing, a thermal polymerization treatment was performed in a high-temperature reaction kettle, with a high-purity nitrogen gas being introduced as a protective gas into the reaction kettle, wherein a temperature of the thermal polymerization treatment was 550 °C, and treatment time was 3 h, to obtain a precursor.
(3) A carbonization treatment was performed on the precursor in a carbonization kiln under a nitrogen atmosphere, wherein a gas flow rate was 20 ml/s, a temperature of the carbonization treatment was 800 °C, and treatment time was 5 h, thereby obtaining the graphite negative electrode material.

The graphite negative electrode material prepared in the present comparative example included the spherical graphite and a carbon coating layer, wherein the carbon coating layer was completely coated on a surface of the spherical graphite, the carbon coating layer accounted for about 100% of a surface area of the graphite, and the carbon coating layer had a modifying group; the graphite negative electrode material had a median particle size (D₅₀) of 15.5 µm, a tap density of 0.96 g/cm³, and a specific surface area of 2.7 m²/g. The carbon coating layer of the graphite negative electrode material was 0.38 µm, and a carbon content in the graphite negative electrode material was 99.94%.

By Raman spectroscopy, a value n of the ratio I_{D}/I_{G} of peak intensity I_{D} at 1350 cm⁻¹ to peak intensity I_{G} at 1580 cm⁻¹ of the graphite negative electrode material was 2.8.

By XPS analysis, it was measured that the carbon coating layer of the graphite negative electrode material contained C-S, S-SO-C, and S-SO₃-C groups.

### Experimental Example

The graphite negative electrode materials prepared in the above examples and comparative examples were subjected to morphological characterization and electrochemical performance test to compare performance characteristics thereof.

### Testing method:

### 1) Particle size of the negative electrode materials:

Referring to GBIT 19077-2016 for a testing method of particle size of the particles, the particle size can be conveniently measured by a laser particle size analyzer, for example, Mastersizer 3000 laser particle size analyzer from Malvern Instruments Ltd., UK.

### 2) Testing method of the specific surface area of the negative electrode materials:

After measuring an adsorption amount of a gas on a solid surface under different relative pressures at a constant and low temperature, a single molecular layer adsorption amount of samples was obtained based on Brunauer-Emmett-Teller adsorption theory and formula (BET formula) thereof, so as to calculate the specific surface area of the material.

### 3) Testing method of the tap density:

Bettersize tap density tester was used. A certain amount of sample was weighed, and the tap density was tested by vibrating the sample for 3000 times at 300 times/min.

### 4) Testing method of the carbon content:

An oxygen content was measured by Fourier infrared spectrometer, and a carbon layer content was measured by thermogravimetric analysis.

### 5) SEM test:

Scanning electron microscopic characterization was performed on a transmission electron microscope, with an operating voltage of 200 kV, structures of the negative electrode materials were observed and thicknesses of the carbon coating layers were calibrated.

### 6) Raman test:

Raman spectroscopy employed Jobin Yvon LabRAM HR spectrometer, with a light source of 532 nm, and a testing range of 0 cm⁻¹~4000 cm⁻¹. A testing range was 100 µm×100 µm, and I_{D}/I_{G} mean value was obtained by counting 100 I_{D}/I_{G} values (where FIG. 4 and FIG. 5 typically represent counting I_{D}/I_{G} values of 100 different sites of the graphite negative electrode materials).

### 7) XPS test:

ESCALAB 250Xi energy dispersive spectrometer from Thermo Scientific, USA was employed as X-ray photoelectron spectrometer (XPS), with a ray source of Al Ka, and a vacuum degree of about 10⁻⁹ Torr. XPS analyzed and detected the carbon coating layer, determined the presence and content of each group by means of peak position, performed peak separation and fitting on the data, calculated the content value of each group by fitted peak area, and calculated the impact factor τ of each element group.

### 8) Electrochemical test:

The electrochemical cycle performance was tested by the following method: dissolving the prepared negative electrode material, conductive carbon black, and a binder (acrylic resin) in a solvent according to a mass percentage of 75:15:10 and mixing the same, controlling a solid content to be 50%, and coating the mixture on a copper foil current collector, followed by vacuum drying to obtain a negative electrode plate; taking a metal lithium sheet as a counter electrode, and assembling the negative electrode plate and the metal lithium sheet into a button battery in an argon-filled glove box. At a current density of 0.1 C, a charge-discharge test was performed according to a charging and discharging interval of 0.01-1.5 V. An initial thickness of an electrode plate of the lithium ion battery was measured by a micrometer to be H0, and charging and discharging were cycled to obtain a first reversible specific capacity, a first-circle charging capacity, and a first-circle discharging capacity, where the initial Coulombic efficiency = first-circle discharging capacity/first-circle charging capacity.

20 cycles were repeated, and the thickness of the electrode plate of the lithium ion battery was measured at this time by the micrometer to be H1, then an expansion rate was (H1-H0)/H0×100% after 20 cycles.

Results of the above performance test are as follows.

First, a button battery test was performed on the obtained electrode plate, the battery was assembled in the argon glove box, the metal lithium sheet was used as a negative electrode, an electrolytic solution was 1 mol/L LiPF6+EC+EMC, a separator was a polyethylene/polypropylene composite microporous membrane, the electrochemical performance was tested on a battery tester, a battery capacity was set as standard 480 mAh/g, a charging-discharging voltage was 0.01-1.5 V, and a charging-discharging rate was 0.1 C.

### (9) Powder electrical conductivity:

MCP-PD51 powder electrical conductivity testing system was used for the powder electrical conductivity, the electrical conductivity of the sample at 8 KN or five pressure points of 4, 8, 12, 16, and 20 KN was measured by a 4-probe method, and after fitting, the powder electrical conductivity corresponding to 9 KN pressure was taken.

### 10) Argon ion sputtering time:

The surface of the negative electrode material was etched using the argon ion sputtering technique, where etching time was incremented at a time interval of 5 s, chemical components inside the material at different etching time (depths) were detected by XPS, and etching time, when F and Li elements disappeared, detected by XPS was counted, wherein this etching time can be used to reflect a depth to which the electrolytic solution penetrates into the coating layer, and if the argon ion sputtering time is relatively short, it is indicated that blocking effect of the modifying group reduces the depth to which the electrolytic solution penetrates into the interior of the particles and reduces the side reactions of the electrolytic solution and the coating layer, and if the argon ion sputtering time is relatively long, it is indicated that the electrolytic solution penetrates relatively deep, and has more side chemical reactions with the coating layer.

**Table 1. Test Result Statistical Table**

| Sample | Carbon content /% | Impact factor T | Reversible capacity /mAh/g | First Coulombic efficiency /% | 20-cycle electrode plate expansion rate /% | Powder electrical conductivity (S/m) | Argon ion sputtering time (s) |
|---|---|---|---|---|---|---|---|
| Example 1 | 99.90 | 3.97 | 365.7 | 96.7 | 20.1 | 308 | 98 |
| Example 2 | 99.93 | 5.32 | 364.8 | 95.4 | 23.4 | 320 | 89 |
| Example 3 | 99.87 | 5.33 | 367.3 | 94.5 | 25.3 | 331 | 87 |
| Example 4 | 99.91 | 601 | 365.8 | 94.6 | 26.2 | 320 | 76 |
| Example 5 | 99.95 | 6.11 | 366.9 | 95.3 | 25.8 | 306 | 73 |
| Example 6 | 99.87 | 0.67 | 365.5 | 96.1 | 26.8 | 295 | 113 |
| Example 7 | 99.96 | 0.99 | 366.3 | 93.4 | 27.6 | 348 | 107 |
| Example 8 | 9830 | 8.43 | 345.6 | 83.2 | 46.8 | 267 | 60 |
| Example 9 | 99.92 | 4.52 | 364.5 | 95.1 | 24.5 | 312 | 92 |
| Example 10 | 99.89 | 512 | 365.2 | 93.8 | 25.3 | 309 | 82 |
| Example 11 | 99.91 | 4.81 | 364.8 | 94.3 | 249 | 302 | 113 |
| Comparative Example 1 | 99.98 | 0 | 363.4 | 93.7 | 31.5 | 318 | 180 |
| Comparative Example 2 | 99.97 | 0.3 | 362.3 | 95.1 | 27.8 | 335 | 120 |
| Comparative Example 3 | 99.94 | 0 | 358.7 | 88.1 | 29.7 | 298 | 150 |

It can be seen from Table 1 that for the graphite negative electrode material provided by Examples 1~11, during the primary thermal treatment, the modifying additive reacts with the coating agent, and the M element-containing group is introduced in the carbon coating layer, such that the irreversible reactions of the negative electrode material and the electrolytic solution during the first cycle can be reduced, the first Coulombic efficiency of the natural graphite can be improved, and meanwhile, the modified carbon coating layer can also effectively prevent anions and solvent molecules in the electrolytic solution from entering the interior of the particles, thus improving expansion property of the natural graphite, and improving the cycle performance. Besides, it can also be seen from the argon ion sputtering time that the argon ion sputtering time of the graphite negative electrode material of the present disclosure is relatively short, it is indicated that the graphite negative electrode material prepared by the examples of the present disclosure is coated by the carbon coating layer including the M element-containing modifying group, and the value range of the impact factor τ of the modifying group is 0.5≤τ≤10, which can reduce the side reactions of the coating layer and the electrolytic solution, improve the first efficiency of the graphite negative electrode material, and effectively prevent anions and solvent molecules in the electrolytic solution from entering the interior of the particles, so as to effectively improve the expansion property of the natural graphite, and improve the cycle performance. Example 8 differs from Example 1 in the temperature of the thermal polymerization treatment, where the thermal polymerization treatment temperature in Example 1 is higher than that in Example 8, then the N element in the modifying additive will more easily react with the coating layer, and will more effectively modify the coating layer by doping. Moreover, the temperature of the carbonization treatment is also relatively high, so that a condensation curing and coking process of the coating agent is more complete, and thus, the carbon content of a final product is further improved. Meanwhile, reaction of the modifying additive can be more complete, so that influence of residual modifying additive on the chemical properties of the negative electrode material can be further avoided, thus the capacity and efficiency of the product are further improved, and meanwhile expansion is also avoided.

In Comparative Example 1, no modifying additive is added, and the carbon coating layer cannot be modified, the reversible capacity and first Coulombic efficiency thereof are both lower than those of the product in Example 1, and the expansion rate of the electrode plate is greatly improved.

Comparing Example 1 with Comparative Example 2, it can be seen that the mass ratio of the graphite to the added modifying additive in Example 1 is in the range of (1~99):1, which can further improve the effective reactions of the modifying additive and the coating agent, form a sufficient amount of effective modifying groups, and further improve the performances of the product, thereby further significantly improving the reversible capacity, the first Coulombic efficiency, and the electrode plate expansion rate compared with the comparative example.

Comparing Example 1 with Comparative Example 3, it can be seen that comparing the graphite negative electrode material prepared with the modifying additive in the present disclosure and that modified by other groups, such as being modified by doping sulfur, in the present disclosure, the group containing at least one element selected from the group consisting of B, N, and P (contained in the modifying agent in the above example) is introduced into the carbon coating layer, which can reduce the irreversible reactions of the negative electrode material and the electrolytic solution during the first cycle, and improve the first Coulombic efficiency of the natural graphite, and meanwhile, the argon ion sputtering time is relatively short, which indicates that the modified carbon coating layer can also effectively prevent anions and solvent molecules in the electrolytic solution from entering the interior of the particles, and the more apparent the blocking effect thereof is, the smaller the permeation effect of the electrolytic solution is, and the side reactions are correspondingly reduced, further improving the expansion property of the natural graphite, and improving the cycle performance.

The applicant declares that the examples described in the present description are intended to explain the present disclosure, specific substances, formulation proportions, and reaction conditions mentioned are merely specific examples of the substances, formulation proportions, and reaction conditions mentioned in the above of the present disclosure, rather than further limiting the present disclosure, i.e., not meaning that the present disclosure must rely on the above detailed methods to implement. A person skilled in the art should know that all technologies realized on the basis of the above contents of the present disclosure belong to the scope of the present disclosure, and any improvement on the present disclosure, equivalent substitutions of various raw materials and addition of auxiliary components of product of the present disclosure, selection of a specific mode, and the like, all fall within the scope of protection and the disclosed scope of the present disclosure.

### Industrial Applicability

For the graphite negative electrode material provided in the present disclosure, the first efficiency of the graphite negative electrode material can be improved, and meanwhile, the modified carbon coating layer also can effectively prevent the anions and solvent molecules in the electrolytic solution from entering the interior of the particles, thus improving the expansion property of the natural graphite, and promoting the cycle performance. In another aspect, in the preparation method of a graphite negative electrode material provided in the present disclosure, during the thermal polymerization treatment, the modifying additive reacts with the coating agent, and the M element-containing group is introduced in the carbon coating layer, such that the irreversible reactions of the negative electrode material and the electrolytic solution during the first cycle can be reduced, the first Coulombic efficiency of the natural graphite can be improved, and meanwhile, the modified carbon coating layer can also effectively prevent the anions and solvent molecules in the electrolytic solution from entering the interior of the particles, thus improving the expansion property of the natural graphite, and improving the cycle performance. Therefore, the graphite negative electrode material, the preparation method thereof, and the lithium ion battery containing the same provided in the present disclosure all have excellent practical values and wide application prospects.

## Claims

1. A graphite negative electrode material, **characterized in that** the graphite negative electrode material comprises graphite and a carbon coating layer present on at least a part of a surface of the graphite, the carbon coating layer comprises an M element-containing modifying group, where M is at least one selected from the group consisting of B, N, and P, and an impact factor τ of the modifying group has a value range of 0.5≤τ≤10.

2. The graphite negative electrode material according to claim 1, satisfying at least one of the conditions a~i below:
a. the graphite comprises spherical graphite;
b. the graphite comprises spherical graphite, and the spherical graphite is natural graphite;
c. the graphite has a median particle size of 5 µm~25 µm;
d. a mass ratio of the graphite to the carbon coating layer is (1~99):1;
e. the graphite negative electrode material has a tap density of 0.6 g/cm³~1.5 g/cm³;
f. the graphite negative electrode material has a specific surface area of 0.1 m²/g~10 m²/g;
g. the graphite negative electrode material has a median particle size of 5 µm~30 µm;
h. the carbon coating layer has a thickness of 0.01 µm~5 µm; and
i. a mass content of carbon in the graphite negative electrode material is 95%~100%.

3. The graphite negative electrode material according to claim 1 or 2, satisfying at least one of the conditions a~g below:
a. the impact factor τ of the modifying group is τ=1.3σ_{B}+4.7σ_{P}+3.5σ_{N}, where σ_{B}, σ_{P}, and σ_{N} are greater than or equal to 0, σ_{B} is an impact factor of a B element-containing modifying group in the graphite negative electrode material, σ_{P} is an impact factor of a P element-containing modifying group in the graphite negative electrode material, and σ_{N} is an impact factor of an N element-containing modifying group in the graphite negative electrode material;
b. σ_{B}, σ_{P}, and σ_{N} are not simultaneously 0;
c. in Raman spectrum of the graphite negative electrode material, a value of a ratio I_{D}/I_{G} of a peak area I_{D} at 1350 cm⁻¹ to a peak area I_{G} at 1580 cm⁻¹ is n, 0<n≤5;
d. the modifying group comprises at least one of a -C-M- group and a -M-O- group;
e. the B element-containing modifying group comprises at least one of a - C-B₄- group, a -C-B₃- group, and a -BCO₂- group;
f. the P element-containing modifying group comprises at least one of a - P-O- group and a -P-C- group; and
g. the N element-containing modifying group comprises at least one of a pyridine nitrogen group, a pyrrole nitrogen group, and a -C-N- group.

4. The graphite negative electrode material according to any one of claims 1-3, satisfying at least one of the conditions a~c below:
a. the carbon coating layer is an amorphous carbon coating layer;
b. the carbon coating layer is amorphous carbon, and the amorphous carbon is derived from at least one of asphalt, petroleum coke, smokeless coal, asphalt coke, coal based coke, resin, grease, alkanes, alkenes, alkynes, and aromatics; and
c. the carbon coating layer is amorphous carbon, the amorphous carbon is derived from asphalt, and the asphalt is at least one selected from the group consisting of petroleum asphalt, coal pitch, modified asphalt, and mesophase pitch.

5. A preparation method of a graphite negative electrode material, **characterized by** comprising steps of:
performing a thermal polymerization treatment on a mixture containing graphite, a coating agent, and a modifying additive, to obtain a precursor, wherein a mass ratio of the coating agent to the modifying additive is (1~99):1, the modifying additive comprises an element M-containing compound, and the M is at least one selected from the group consisting of B, N, and P; and
performing a carbonization treatment on the precursor under a protective atmosphere, to obtain the graphite negative electrode material.

6. The preparation method according to claim 5, satisfying at least one of the conditions a~e below:
a. the coating agent comprises at least one of asphalt, petroleum coke, smokeless coal, asphalt coke, coal based coke, resin, grease, alkanes, alkenes, alkynes, and aromatics;
b. the element M-containing compound comprises at least one of an element M-containing organic substance, an element M-containing acid, and an element M-containing salt, where M is at least one selected from the group consisting of B, N, and P;
c. an element M-containing organic substance comprises at least one of amine organic substances, N-vinyl amide polymer organic substances, borane organic substances, alkyl boron organic substances, ester organic substances, phosphine organic substances, and carborane organic substances;
d. an element M-containing inorganic acid is at least one selected from the group consisting of phosphoric acid, phosphorous acid, hypophosphorous acid, nitric acid, nitrous acid, hyponitrous acid, boracic acid, boric acid, and hypoboric acid; and
e. an element M-containing salt comprises one of ammonium salt, sodium salt, potassium salt, lithium salt, magnesium salt, manganese salt, iron salt, cobalt salt, nickel salt, copper salt, and zinc salt.

7. The preparation method according to claim 5 or 6, satisfying at least one of the conditions a~l below:
a. the graphite comprises spherical graphite;
b. the graphite has a median particle size of 5 µm~25 µm;
c. a mass content of carbon in the graphite is greater than or equal to 95%;
d. the coating agent comprises at least one of petroleum asphalt, coal pitch, modified asphalt, and mesophase pitch;
e. the coating agent has a softening point of 80 °C~400 °C;
f. the coating agent has a carbon residual value of 10%~80%;
g. a mass ratio of the graphite to the coating agent is (1~99):1;
h. an element M-containing compound comprises at least one of an element M-containing organic substance, an element M-containing acid, and an element M-containing ammonium salt;
i. an element M-containing organic substance comprises at least one of melamine, polyvinylpyrrolidone, urea, N-methylpyrrolidone, borane, alkyl boron, phosphate, phosphonate, phosphinate, pentaphenylphosphine, methylene trihydrocarbylphosphine, and carborane;
j. an element M-containing acid is at least one selected from the group consisting of phosphoric acid, nitric acid, and boracic acid;
k. an element M-containing ammonium salt is at least one selected from the group consisting of ammonium phosphate, monoammonium phosphate, diammonium hydrogen phosphate, ammonium nitrate, ammonium sulfate, ammonium carbonate, and ammonium borate; and
l. the modifying additive comprises at least one of urea, ammonium nitrate, sodium borate, ammonium sulfate, diammonium hydrogen phosphate, phosphoric acid, and ammonium phosphate.

8. The preparation method according to any one of claims 5-7, satisfying at least one of the conditions a~c below:
a. a reaction temperature of the thermal polymerization treatment is 150 °C~700 °C;
b. a reaction time of the thermal polymerization treatment is 1 h~5 h; and
c. a heating rate of the thermal polymerization treatment is 1 °C/min~5 °C/min.

9. The preparation method according to any one of claims 5-8, satisfying at least one of the conditions a~e below:
a. a reaction temperature of the carbonization treatment is 600 °C~1500 °C;
b. a reaction time of the carbonization treatment is 1 h~10 h;
c. a heating rate of the carbonization treatment is 1 °C/min~5 °C/min;
d. the protective atmosphere comprises at least one of nitrogen gas, helium gas, neon gas, argon gas, krypton gas, and xenon gas; and
e. the protective atmosphere has a gas flow rate of 2 ml/s~100 ml/s.

10. The preparation method according to any one of claims 5-9, satisfying at least one of the conditions a~c below:
a. the preparation method further comprises: shaping natural flake graphite, to obtain spherical graphite;
b. the shaping comprises at least one of crushing, spheroidizing or classifying; and
c. the spherical graphite has a tap density of 0.6 g/cm³~1.5 g/cm³.

11. A graphite negative electrode material, **characterized in that** the graphite negative electrode material is prepared by the preparation method of a graphite negative electrode material according to any one of claims 5~10.

12. A negative electrode, **characterized in that** the negative electrode contains the graphite negative electrode material according to any one of claims 1~4 or a negative electrode prepared by the preparation method of a graphite negative electrode material according to any one of claims 5~10.

13. A lithium ion battery, **characterized in that** the lithium ion battery contains the graphite negative electrode material according to any one of claims 1~4 or the graphite negative electrode material prepared by the preparation method of a graphite negative electrode material according to any one of claims 5~10.
